# EUROPEAN PATENT APPLICATION

(11) **EP 4 691 683 A1**
(43) Date of publication of application: **11.02.2026**
(21) Application number: 24883833.6
(22) Date of filing: 06.05.2024
(51) Int. Cl.: B23K 37/04

(54) **WELDING FIXTURE AND WELDING DEVICE COMPRISING SAME**

(30) Priority: 31.10.2023 CN 202322940863 U
(71) Applicant: Contemporary Amperex Technology Co., Limited, Ningde, Fujian 352100 (CN)
(72) Inventor: CAO, Fugen, Ningde, Fujian 352100 (CN); FANG, Cheng, Ningde, Fujian 352100 (CN); KE, Pengfei, Ningde, Fujian 352100 (CN); ZHUANG, Zijing, Ningde, Fujian 352100 (CN)
(74) Representative: Kraus & Lederer PartGmbB
(86) International application number: PCT/CN2024/091280
(87) International publication number: WO 2025/091820

(57) **Abstract**

A welding fixture and a welding device including same. The welding fixture includes: a fixing base, the fixing base being configured to fix a battery cell; and at least one pressure plate, the pressure plate being detachably fixed to the fixing base, and being configured to press a tab of the battery cell against a terminal post. The pressure plate is provided with a clearance through hole and a gas guide channel. The clearance through hole is disposed opposite to a to-be-welded region between the tab and the terminal post. The gas guide channel communicates with the clearance through hole to guide shielding gas into the clearance through hole. In the technical solution in embodiments of the present application, the welding fixture according to the embodiments of the present application has advantages such as controlling spatter of welding slag at the to-be-welded region between the terminal post and the tab and removing welding slag on the terminal post and the tab, to reduce welding slag remaining in the to-be-welded region between the terminal post and the tab, thereby reducing a possibility that welding slag enters the interior of the battery cell and improving the quality of welding.

## Description

### CROSS-REFERENCE TO RELATED APPLICATIONS

The present application claims priority to and benefits of Chinese Patent Application No. 202322940863.4, filed on October 31, 2023. The entire content of the above-referenced application is incorporated herein by reference.

### TECHNICAL FIELD

The present application relates to the field of welding devices, and specifically, to a welding fixture and a welding device including the welding fixture.

### BACKGROUND

Energy conservation and emission reduction are key to the sustainable development of an automotive industry, and electric vehicles have become an important part of the sustainable development of the automotive industry due to their advantages in energy conservation and environmental protection. For electric vehicles, battery technology is also an important factor related to their development.

In the related art, during welding of a tab and a terminal post of an electrode assembly, generated welding slag easily falls into the interior of a battery, and the welding slag affects the quality of welding.

### SUMMARY

In view of the foregoing problem, the present application provides a welding fixture and a welding device including the welding fixture, to reduce a possibility that welding slag enters the interior of a battery cell and improve the quality of welding.

According to a first aspect, the present application provides a welding fixture, including: a fixing base, the fixing base being configured to fix a battery cell; and at least one pressure plate, the pressure plate being detachably fixed to the fixing base, and being configured to press a tab of the battery cell against a terminal post, where the pressure plate is provided with a clearance through hole and a gas guide channel, the clearance through hole is disposed opposite to a to-be-welded region between the tab and the terminal post, and the gas guide channel communicates with the clearance through hole to guide shielding gas into the clearance through hole.

In the technical solution in the embodiments of the present application, the shielding gas is delivered into the gas guide channel during a welding process, and the shielding gas enters the clearance through hole along the gas guide channel, so that spatter of welding slag at the to-be-welded region between the terminal post and the tab can be controlled, and welding slag on the terminal post and the tab can be removed, to reduce welding slag remaining in the to-be-welded region between the terminal post and the tab, thereby reducing a possibility that welding slag enters the interior of the battery cell and reducing the impact of welding slag on the quality of welding. In addition, the shielding gas is guided into the clearance through hole, so that the quality of weld seams can be further improved, and the oxide rates of the tab and the terminal post can be reduced.

In some embodiments, an adapter configured to connect to gas supply tubing is disposed on the pressure plate, and the adapter communicates with the gas guide channel. In the foregoing technical solution, the adapter is disposed on the pressure plate, so that the shielding gas in the gas supply tubing can smoothly enter the gas guide channel through the adapter, thereby guiding the shielding gas into the gas guide channel. Because the gas guide channel communicates with the clearance through hole, the shielding gas flows along the gas guide channel into the clearance through hole. During welding of the to-be-welded region between the tab and the terminal post, welding slag is formed in the to-be-welded region between the terminal post and the tab. The shielding gas may control spatter of welding slag, and remove welding slag in the to-be-welded region between the terminal post and the tab to reduce welding slag attached to the terminal post and the tab, thereby reducing the possibility that welding slag enters the interior of the battery cell and improving the quality of welding.

In some embodiments, the clearance through hole is configured for plug-in fit with a welding tip nozzle of a welding device, and the clearance through hole forms an elongated hole corresponding to a shape of the welding tip nozzle. In the foregoing technical solution, the shape of the clearance through hole matches the shape of the welding tip nozzle, to conveniently implement the plug-in fit between the welding tip nozzle and the clearance through hole. In this way, a gap between a side wall of the clearance through hole and the welding tip nozzle is conveniently reduced. On one hand, a possibility that shielding gas leaks at the gap between the side wall of the clearance through hole and the welding tip nozzle can be reduced. On the other hand, a probability that welding slag is stuck between the clearance through hole and the welding tip nozzle can be reduced, so that welding slag can be smoothly removed, to reduce welding slag remaining on the terminal post and the tab, thereby further reducing the possibility that welding slag enters the interior of the battery cell.

In some embodiments, the gas guide channel is located on a side of the clearance through hole in a length direction, and an outlet of the gas guide channel is located in a middle of the clearance through hole in the length direction. In the foregoing technical solution, the outlet of the gas guide channel is located in the middle of the clearance through hole in the length direction, so that during the delivery of the shielding gas, the shielding gas can enter the clearance through hole from the middle of the clearance through hole in the length direction, and the shielding gas can be quickly and evenly distributed in the clearance through hole. Because the clearance through hole is disposed opposite to the to-be-welded region between the terminal post and the tab, it is convenient to evenly distribute the shielding gas in the to-be-welded region between the terminal post and the tab, so that the shielding gas can fully remove welding slag generated in the to-be-welded region between the terminal post and the tab, thereby reducing welding slag attached to the to-be-welded region between the terminal post and the tab, and fully reducing the possibility that welding slag enters the interior of the battery cell.

In some embodiments, the pressure plate is provided with an abutting portion, and the abutting portion is configured to abut against the tab to press the tab against the terminal post. In the foregoing technical solution, the pressure plate applies pressure to the tab through the abutting portion, to reduce the gap between the tab and the terminal post and enlarge a contact area between the tab and the terminal post, and make the tab and the terminal post to be joined to each other as much as possible. In this way, during welding of the to-be-welded region between the tab and the terminal post, it is beneficial to securely weld the tab and the terminal post together, so that the tab and the terminal post are kept from being easily disconnected.

In some embodiments, the abutting portion is disposed around a periphery of the clearance through hole. In the foregoing technical solution, the abutting portion is disposed around the periphery of the clearance through hole, so that the abutting portion provides clearance for the to-be-welded region between the terminal post and the tab, and the welding device can smoothly perform welding on the to-be-welded region between the terminal post and the tab through the clearance through hole, to smoothly weld the tab and the terminal post together. In addition, the abutting portion is disposed around the periphery of the clearance through hole, so that the abutting portion can be in pressing fit with an outer edge of the to-be-welded region between the terminal post and the tab, and can further compress the edges of the tab and the terminal post, so that the edges of the to-be-welded region between the terminal post and the tab do not easily lift. In this way, it is convenient to ensure the flatness of the to-be-welded region between the terminal post and the tab, to better perform welding on the to-be-welded region between the terminal post and the tab, thereby more securely welding the terminal post and the tab together.

In some embodiments, the abutting portion forms a convex rib protruding from an outer surface of the pressure plate. In the foregoing technical solution, the convex rib extends toward the to-be-welded region between the terminal post and the tab. In this way, when the pressure plate is fixed on the fixing base and the convex rib is in pressing fit with the tab, a specific distance exists between the outer surface of the pressure plate and the tab, to reduce a possibility that the tab contacts the outer surface of the pressure plate. In this way, at a position of the moving pressure plate, a possibility that the pressure plate drives the tab to move can be reduced, to ensure that the position of the tab corresponds to that of the terminal post, thereby securely welding the tab and the terminal post together.

In some embodiments, a fixing portion is provided on the pressure plate, and a fixing engagement portion that engages with the fixing portion is provided on the fixing base. In the foregoing technical solution, the pressure plate can be detachably fixed to the fixing base through the engagement between the fixing portion and the fixing engagement portion, to facilitate the detachment of the pressure plate and facilitate the fixing of the battery cell to the fixing base or the removal of the battery cell from the fixing base, thereby facilitating the processing of the battery cell.

In some embodiments, one of the fixing portion and the fixing engagement portion is a fixing hole, and the other of the fixing portion and the fixing engagement portion is a fixing post in plug-in fit with the fixing hole. In the foregoing technical solution, the pressure plate and the fixing base are in plug-in fit through the fixing post and the fixing hole, to implement quick engagement between the pressure plate and the fixing base, to facilitate the quick fixing of the pressure plate on the fixing base or the quick detachment the pressure plate from the fixing base, thereby reducing operation time and improving processing efficiency.

In some embodiments, at least two fixing portions are provided, and the clearance through hole is located between the at least two fixing portions. In the foregoing technical solution, at least two fixing portions are disposed on the pressure plate. In this way, when the pressure plate is fixed on the fixing base and the fixing portions match the fixing engagement portion, the fixing engagement portion can limit the rotation of the pressure plate, thereby stably fixing the pressure plate on the fixing base. The clearance through hole is located on two sides of the fixing portions. In this way, after the fixing portions are engaged with the fixing engagement portion and the pressure plate is disposed on the fixing base, the positions of two sides of the clearance through hole are fixed. In this way, it is convenient to precisely define the position of the clearance through hole, so that the clearance through hole can be precisely disposed opposite to the to-be-welded region between the terminal post and the tab. In this way, the welding device can perform precise welding on the to-be-welded region between the terminal post and the tab through the clearance through hole, thereby improving welding precision.

In some embodiments, the gas guide channel is located between one of the fixing portions and the clearance through hole. In the foregoing technical solution, such arrangement conveniently increases the distance between the clearance through hole and the fixing portion, and increases the distance between the gas guide channel and the fixing portion, to improve the structural strength of the pressure plate, thereby preventing the pressure plate from being easily deformable.

In some embodiments, the fixing base includes: a positioning bracket; and a fixing housing, the fixing housing being disposed at the positioning bracket and defining an accommodating groove provided with a top opening, and the accommodating groove being configured to accommodate the battery cell, where the pressure plate is disposed above the accommodating groove, the clearance through hole is disposed opposite to the top opening, and the pressure plate is detachably connected to the positioning bracket to fix the battery cell in the accommodating groove. In the foregoing technical solution, the accommodating groove is configured to accommodate the battery cell. The position of the fixing housing is fixed to fix the position of the battery cell. In this way, the battery cell can be further protected while the battery cell is fixed, thereby reducing a possibility that the battery cell is damaged.

In some embodiments, at least two oppositely disposed side walls of the fixing housing are provided with clearance notches, and the clearance notches extend along a depth direction of the accommodating groove and communicate with the top opening. In the foregoing technical solution, when the battery cell is disposed in the accommodating groove, the clearance notches are configured to provide clearance for an instrument or a hand, so that the battery cell can be smoothly disposed in the accommodating groove, to reduce a possibility that the battery cell collides with a wall body of the accommodating groove, thereby reducing a possibility that the battery cell is damaged.

In some embodiments, the positioning bracket includes: a positioning plate, the positioning plate being provided with a mounting region, and the fixing housing being disposed in the mounting region; and a plurality of limiting members, the plurality of limiting members being disposed on the positioning plate and being disposed at intervals around a peripheral direction of the mounting region, and the pressure plate being in fixed engagement with the limiting members. In the foregoing technical solution, the fixing housing is disposed in the mounting region, so that the fixing housing can be fixed to the mounting plate. When the battery cell is disposed in the accommodating groove, the plurality of limiting members are disposed at intervals around the peripheral direction of the battery cell. When the pressure plate and the limiting members are in fixed engagement, relative positions of the pressure plate and the battery cell can be accurately determined, so that the clearance through hole can be accurately disposed opposite to the to-be-welded region between the terminal post and the tab. When the welding device performs welding on the tab and the terminal post through the clearance through hole, the terminal post and the tab at the to-be-welded region between the terminal post and the tab can be accurately welded together.

In some embodiments, a positioning hole is provided in the mounting region, and the fixing housing is disposed in the positioning hole. In the foregoing technical solution, the fixing housing extends into the positioning hole, the position of the fixing housing may be preliminarily limited by a side wall of the positioning hole, and the side wall of the positioning hole has a clamping force for the fixing housing, to implement fixed engagement between the fixing housing and the positioning plate. This fixing manner is simple and convenient to implement, facilitates adjustment of a length by which the fixing housing extends out of the positioning hole, and adjusts a distance between the top opening of the accommodating groove and the top of the limiting member. When the pressure plate is fixed to the limiting member, it is convenient to control a distance between the pressure plate and the battery cell, and control the magnitude of a pressing force of the pressure plate on the tab of the battery cell, to make the tab fully in pressing fit with the terminal post, so that the welding device can securely weld the tab and the terminal post together.

In some embodiments, the positioning plate is connected to the limiting members by fastening members. In the foregoing technical solution, the fixed engagement between the positioning plate and the limiting member is implemented using a simple method, thereby reducing mounting difficulty and reducing costs.

In some embodiments, two pressure plates are provided, four limiting members are provided and are grouped in pairs, and the two limiting members in each group are located on two opposite sides of the fixing housing and are in fixed engagement with the corresponding pressure plate. In the foregoing technical solution, each pressure plate is in fixed engagement with a group of limiting members, and four limiting members are provided, so that the two pressure plates are disposed on the fixing base. The two pressure plates abut against two tabs of the battery cell. The two pressure plates may separately apply pressure to the two tabs, so that the two tabs can be in pressing fit with corresponding terminal post. The welding device may separately perform welding on the two tabs within a short time, thereby improving the welding efficiency of the welding device.

According to a second aspect, the present application provides a welding device, including: a device body, the device body being provided with a worktable surface; and the welding fixture in the foregoing embodiment, the welding fixture being disposed on the worktable surface.

In the technical solution in the embodiments of the present application, the shielding gas is delivered into the gas guide channel during a welding process, and the shielding gas enters the clearance through hole along the gas guide channel, so that spatter of welding slag at the to-be-welded region between the tab and the terminal post can be controlled, and welding slag on the tab and the terminal post can be removed, to reduce welding slag remaining in the to-be-welded region between the tab and the terminal post, thereby improving the quantity of welding of the welding device.

In some embodiments, the device body includes: a mounting bracket, the mounting bracket being disposed on the worktable surface; a welding tip nozzle, the welding tip nozzle being disposed in the mounting bracket, and being configured to interface with the clearance through hole; and a dust removal assembly, the dust removal assembly being configured to deliver the shielding gas to the gas guide channel. In the foregoing technical solutions, the dust removal assembly delivers the shielding gas into the gas guide channel. Because the gas guide channel communicates with the clearance through hole, the shielding gas enters the clearance through hole along the gas guide channel, so that the shielding gas can control the spatter of welding slag at the to-be-welded region between the tab and the terminal post, and remove welding slag on the tab and the terminal post, to reduce welding slag remaining on the tab and the terminal post, thereby reducing a possibility that welding slag enters the interior of the battery cell and improving the quality of welding. In addition, the shielding gas is guided into the clearance through hole, so that the quality of weld seams can be further improved, and the oxide rates of the tab and the terminal post can be reduced.

In some embodiments, a lifting assembly is disposed on the mounting bracket, and the lifting assembly is connected to the welding tip nozzle to drive the welding tip nozzle to move up and down. In the foregoing technical solution, the welding tip nozzle is driven to move up and down to adjust a position of the welding tip nozzle in an up-down direction, to adapt to situations in which the pressure plate is at different heights, so that the welding tip nozzle can smoothly interface with the clearance through hole. In addition, a downward force is applied to the welding tip nozzle, and the welding tip nozzle can apply a downward force to the pressure plate, to increase a pressing force between the pressure plate and the tab, so that the tab is fully in pressing fit with the terminal post, thereby making the tab and the terminal post more securely fixed together when the tab and the terminal post are welded.

The above description only refers to an overview of the technical solution of the present application. In order to understand the technical means of the present application more clearly, it can be implemented according to the content of the description. In order to make the above-mentioned and other purposes, features and advantages of the present application more apparent, the specific embodiments of the present application are listed below.

### BRIEF DESCRIPTION OF THE DRAWINGS

The foregoing and/or additional aspects and advantages of the present application will become apparent and comprehensible in the following descriptions of embodiments with reference to the following accompanying drawings.
FIG. 1 is a schematic diagram of a structure of a welding fixture according to some embodiments of the present application;
FIG. 2 is a side view of a welding fixture according to some embodiments of the present application;
FIG. 3 is a cross-sectional view of a welding fixture according to some embodiments of the present application;
FIG. 4 is a schematic diagram of a structure of a pressure plate according to some embodiments of the present application;
FIG. 5 is a top view of a pressure plate according to some embodiments of the present application;
FIG. 6 is a side view of a pressure plate according to some embodiments of the present application;
FIG. 7 is a partial schematic diagram of a structure of a pressure plate according to some embodiments of the present application;
FIG. 8 is a side view of a pressure plate according to some embodiments of the present application;
FIG. 9 is an exploded view of a structure of a welding fixture according to some embodiments of the present application;
FIG. 10 is a schematic diagram of a structure of a positioning bracket of a welding fixture according to some embodiments of the present application;
FIG. 11 is a schematic diagram of a structure of a fixing housing according to some embodiments of the present application;
FIG. 12 is a schematic diagram of a structure of a limiting member according to some embodiments of the present application;
FIG. 13 is a schematic diagram of a structure of a positioning plate according to some embodiments of the present application;
FIG. 14 is a schematic diagram of a structure of a welding device according to some embodiments of the present application; and
FIG. 15 is a side view of a welding device according to some embodiments of the present application.

Reference numerals in the specific implementations are as follows:
battery cell 20, case cover 21, terminal post 21a, case body 22, electrode assembly 23, tab 23a, and explosion-proof valve 24;
welding device 3000, and welding fixture 300;
fixing base 30, positioning bracket 31, positioning plate 311, positioning hole 3112, first connecting hole 3113, limiting member 312, second connecting hole 3121, fixing housing 32, accommodating groove 321, top opening 322, clearance notch 323, and fixing engagement portion 35;
pressure plate 40, clearance through hole 41, gas guide channel 42, adapter 43, abutting portion 44, fixing portion 45, and fastening member 51; and
device body 600, worktable surface 61, mounting bracket 62, lifting assembly 621, welding tip nozzle 63, dust removal assembly 64, laser welding portion 65, first track 661, second track 672, and third track 673.

### DETAILED DESCRIPTION

The following describes embodiments of technical solutions of the present application in detail with reference to the accompanying drawings. The following embodiments are only used to illustrate the technical solutions of the present application more explicitly, and are thus only interpreted as examples, rather than used to limit the protection scope of the present application.

Unless defined otherwise, all technical and scientific terms used herein have the same meaning as commonly understood by those skilled in the technical filed to which the present application belongs. The terminology used herein is for the purpose of describing particular embodiments only and is not intended to limit the present application. The terms "comprising" and "having" and any variations thereof in the description and claims of the present application and the above description of the accompanying drawings are intended to cover non-exclusive inclusions.

In the description according to the embodiments of the present application, the technical terms "first", "second", and the like are only used to distinguish different objects, and should not be understood as indicating or implying relative importance or implying the number, specific order or primary and secondary relationship of indicated technical features. In the description according to the embodiments of the present application, the technical terms "first", "second", and the like are only used to distinguish different objects, and should not be understood as indicating or implying relative importance or implying the number, specific order or primary and secondary relationship of indicated technical features.

Reference herein to an "embodiment" means that a specific feature, structure, or characteristic described in connection with the embodiment can be included in at least one embodiment of the present application. The phrase shown in various locations in the specification may not necessarily refer to a same embodiment, and is not an independent or alternative embodiment exclusive from another embodiment. It shall be explicitly and implicitly understood by those skilled in the art that the embodiments described herein may be combined with other embodiments.

In the description of the embodiments of the present application, the term "and/or" is merely an association to describe the associated objects. It can mean that there are three kinds of relationships, such as A and/or B, which means that A exists alone, A and B exist at the same time, and B exists alone. In addition, the character "/" herein generally indicates an "or" relationship between the contextual objects.

In the description of the embodiments of the present application, the term "a plurality of" refers to "two or more". Similarly, "a plurality of sets" refers to "two or more sets", and "a plurality of pieces" refers to "two or more pieces".

In the description according to the embodiments of the present application, the directions or positional relationships indicated by the technical terms such as "center", "longitudinal", "transverse", "length", "width", "thickness", "upper", "lower", "front", "rear", "left", "right", "vertical", "horizontal", "top", "bottom", "inside", "outside", "axial", "radial", and "circumferential", are only for the convenience of describing the embodiments of the present application and simplifying the description, rather than indicating or implying that the involved device or element should have a specific orientation or should be configured or operated in the specific orientation, therefore, they cannot be understood as limiting the embodiments of the present application.

In the description according to the embodiments of the present application, unless otherwise expressly specified and defined, the technical terms "installed", "connected to", "connected with", "fixed", and the like should be interpreted in a broad sense. For example, a connection may refer to a fixed connection, a disassembly connection or an integral connection; or may refer to a mechanical connection or an electrical connector; or may refer to a direct connection or an indirect connection through an intermediate medium; or may refer to an internal communication between the two elements or the interaction relationship between the two elements. For those of ordinary skill in the art, the specific meanings of the above terms in the embodiments of the present application may be interpreted according to specific situations.

Nowadays, from the perspective of development of the market situation, the power batteries are applied increasingly. The power batteries are not only used in energy storage power systems such as water power plant, fire power plant, wind power plant and solar power plant, but also in electric transportations such as electric bicycles, electric motorcycles, electric vehicles, as well as in military equipment, aerospace and other fields. With continuous expansion of application fields of traction batteries, market demands for traction batteries are also expanding.

In a production process of a battery cell, when a tab and a terminal post need to be welded together to implement an electrical connection between the tab and the terminal post, welding slag generated in a welding process affects the quality of welding and has a risk of falling into the interior of the battery cell. When welding slag falls into the interior of the battery cell, the battery cell is prone to a short circuit, affecting use reliability of the battery cell.

To resolve the problem that the quality of welding between a tab and a terminal post of an electrode assembly is poor and welding slag easily falls into the interior of a battery cell, in the present application, a gas guide channel is provided in the pressure plate, and shielding gas may enter a to-be-welded region between the terminal post and the tab through the gas guide channel to blow away welding slag generated in a welding process to the outside of the battery cell, thereby reducing welding slag attached to the battery cell, and further improving the quality of welding and reducing the risk that welding slag falls into the interior of the battery cell.

The welding fixture disclosed in the embodiments of the present application may be configured to clamp the battery cell to fix the battery cell and control the positions of the battery cell and the welding device, so that the welding device can accurately position the battery cell, to perform welding on a specified position of the battery cell. Besides, the welding fixture may be further configured to clamp the battery cell to change the position of the battery cell, transport the battery cell, and the like.

For ease of description in the following embodiments, a welding fixture 300 in an embodiment of the present application is described.

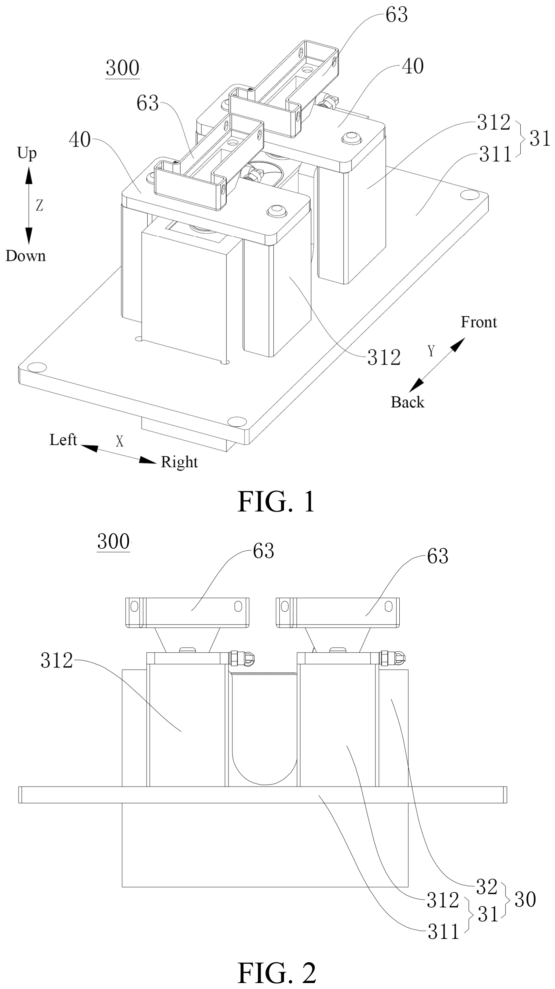

According to some embodiments of the present application, the present application provides a welding fixture 300. FIG. 1 is a schematic diagram of a structure of a welding fixture 300 according to some embodiments of the present application. FIG. 2 is a side view of a welding fixture 300 according to some embodiments of the present application. The welding fixture 300 includes a fixing base 30. The fixing base 30 is configured to fix the position of the battery cell 20, so that during the processing of the battery cell 20, the position of the battery cell 20 is not easily changed when the battery cell 20 is subjected to a force, thereby ensuring the processing precision of the battery cell 20.

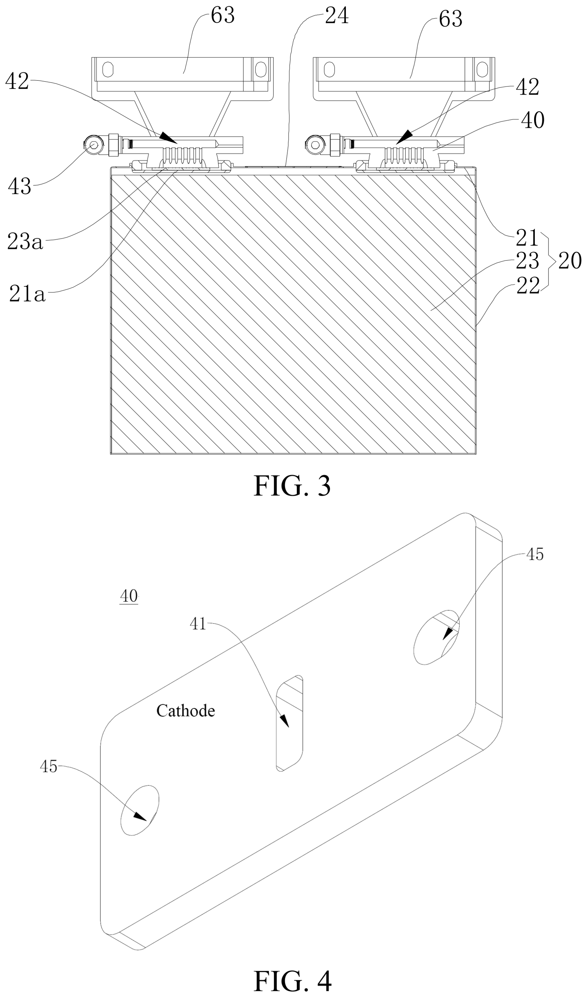

FIG. 3 is a cross-sectional view of a welding fixture 300 according to some embodiments of the present application. The battery cell 20 includes a case, an electrode assembly 23, and other functional elements. The case includes a case cover 21 and a case body 22.

The case cover 21 refers to an element that covers an opening of the case body 22 to isolate an internal environment of the battery cell 20 from an external environment. A shape of the case cover 21 is not limited and may be adapted to a shape of the case body 22 to fit the case body 22. Optionally, the case cover 21 may be made of a material with specified hardness and strength (for example, aluminum alloy), so that the case cover 21 is less likely to deform under extrusion and collision, enabling the battery cell 20 to have a higher structural strength and enhanced safety performance. Functional elements such as a terminal post 21a may be disposed on the case cover 21. The terminal post 21a may be configured to electrically connect to the electrode assembly 23 to output or input electrical energy of the battery cell 20. In some embodiments, an explosion-proof valve 24 may be further disposed on the case cover 21. The explosion-proof valve 24 is configured to relieve internal pressure when the internal pressure or temperature in the battery cell 20 reaches a threshold. The case cover 21 may alternatively be made of various materials, such as copper, iron, aluminum, stainless steel, aluminum alloy, and plastic, which are not particularly limited in the embodiments of the present application. In some embodiments, an insulator may alternatively be arranged on an inner side of the case cover 21. The insulator can be configured to isolate electrical connection parts in the case body 22 from the case cover 21, reducing a risk of short circuit. For example, the insulating member may be made of plastic, rubber, or the like.

The case body 22 is an assembly configured to form an internal environment of the battery cells 20 together with the case cover 21, where the formed internal environment may be configured to accommodate the electrode assembly 23, an electrolyte solution, and other elements. The case body 22 and the case cover 21 may be separate components, an opening may be provided in the case body 22, and the case cover 21 covers the opening to form the internal environment of the battery cell 20. Without limitation, the case cover 21 and the case body 22 may alternatively be integrated. Specifically, the case cover 21 and the case body 22 may form a shared connection surface before other components are arranged inside the case, and then the case cover 21 covers the case body 22 when inside of the case body 22 needs to be enclosed. The case body 22 may be of various shapes and sizes, such as a rectangular shape, a cylindrical shape, and a hexagonal prism shape. Specifically, the shape of the case body 22 may be determined based on a specific shape and size of an electrode assembly 23. The case body 22 may be made of various materials, such as copper, iron, aluminum, stainless steel, aluminum alloy, and plastic, which are not particularly limited in the embodiments of the present application.

The electrode assembly 23 is an element in the battery cell 100 that undergoes electrochemical reactions. The case body 22 may include one or more electrode assemblies 23. The electrode assembly 23 is mainly formed by winding or laminating a positive electrode plate and a negative electrode plate, and a separator is generally provided between the positive electrode plate and the negative electrode plate. Parts of the positive electrode plate and the negative electrode plate with active substances form a active material coating portion of the electrode assembly 23, while parts of the positive electrode plate and the negative electrode plate without active substances separately form tabs 23a. The positive electrode tab and the negative electrode tab may be located at one end of the body portion together or at two ends of the body portion separately. During charging and discharging of the battery, a positive electrode active substance and a negative electrode active substance react with an electrolyte, and the tabs 23a are connected to the terminal post 21a to form a current loop.

The electrode assembly 23 is disposed in the case. The terminal post 21a may be disposed on the case cover 21 or a wall of the case body 22 that is disposed opposite to the case cover 21. The tab 21a passes through a via in the terminal post 21a and is then bent to cover the terminal post 21a. The tab 21a and the terminal post 23a may be welded together through welding to form a current loop.

Referring to FIG. 1 to FIG. 3 again, the welding fixture 300 further includes at least one pressure plate 40. The pressure plate 40 is detachably fixed to the fixing base 30, and is configured to press the tab 23a of the battery cell 20 against the terminal post 21a.

Specifically, when the battery cell 20 is fixed to the fixing base 30, the pressure plate 40 may be detached to fix the battery cell 20 to the fixing base 30. The pressure plate 40 is then fixed to the fixing base 30. The pressure plate 40 applies a force to the tab 23a of the battery cell 20, so that the tab 23a and the terminal post 21a are in contact fit, to facilitate subsequent welding in a to-be-welded region between the tab 23a and the terminal post 21a, thereby implementing an electrical connection between the tab 23a and the terminal post 21a. Similarly, when the battery cell 20 needs to be removed from the fixing base 30, the pressure plate 40 is first detached from the fixing base 30, and then the battery cell 20 is removed from the fixing base 30.

In this embodiment, the pressure plate 40 and the fixing base 30 may be detachably engaged through parts such as a screw or a bolt. To be specific, when the pressure plate 40 is detached from the fixing base 30, the pressure plate 40 is separated from the fixing base 30. The pressure plate 40 and the fixing base 30 may alternatively be connected by a rotation member. In this way, when the pressure plate 40 is detached from the fixing base 30, because the pressure plate 40 and the fixing base 30 are engaged through the rotation member, it is only necessary to release the pressure plate 40 without considering a placement position of the pressure plate 40, thereby simplifying operations.

The pressure plate 40 is provided with a clearance through hole 41 and a gas guide channel 42. The clearance through hole 41 is disposed opposite to a to-be-welded region between the tab 23a and the terminal post 21a. The gas guide channel 42 communicates with the clearance through hole 41 to guide shielding gas into the clearance through hole 41.

The to-be-welded region between the tab 23a and the terminal post 21a and the clearance through hole 41 are disposed opposite to each other in a Z direction, so that the welding device 3000 can perform welding on the to-be-welded region between the tab 23a and the terminal post 21a at the clearance through hole 41, thereby welding the tab 23a and the terminal post 21a together, and implementing an electrical connection between the tab 23a and the terminal post 21a.

The shielding gas may be single-component gas, or may be a binary or ternary gas mixture. The single-component gas includes argon and carbon dioxide. The binary gas mixture includes a gas mixture of argon and oxygen, a gas mixture of argon and carbon dioxide, a gas mixture of argon and helium, and a gas mixture of argon and hydrogen. The ternary gas mixture includes a gas mixture of helium, argon, and carbon dioxide. During actual application, a welding gas mixture with a suitable ratio may be selected based on a welding material.

In the technical solution in the embodiments of the present application, the gas guide channel 42 communicates with the clearance through hole 41 to guide shielding gas into the clearance through hole 41, the shielding gas is delivered into the gas guide channel 42 during a welding process, and the shielding gas enters the clearance through hole 41 along the gas guide channel 42, so that spatter of welding slag at the to-be-welded region between the tab 23a and the terminal post 21a can be controlled, and welding slag on the tab 23a and the terminal post 21a can be removed, to reduce welding slag remaining in the to-be-welded region between the tab 23a and the terminal post 21a, thereby reducing a possibility that welding slag enters the interior of the battery cell 20 and reducing the impact of welding slag on the quality of welding. In addition, the shielding gas is guided into the clearance through hole 41, so that the quality of weld seams can be further improved, and the oxide rates of the tab 23a and the terminal post 21a can be reduced.

FIG. 3 is a cross-sectional view of a welding fixture 300 according to some embodiments of the present application. An adapter 43 is disposed on the pressure plate 40. The adapter 43 is configured to connect to gas supply tubing. The adapter 43 communicates with the gas guide channel 42.

The adapter 43 is disposed on the pressure plate 40. The adapter 43 may be detachably fixed on the pressure plate 40, or may be integrally formed with the pressure plate 40. For example, the adapter 43 is detachably fixed to the pressure plate 40 by parts such as a screw or a bolt, or the adapter 43 is in plug-in fit with the pressure plate 40 to be detachably fixed to the pressure plate 40. This is not excessively limited herein.

In the technical solution in the embodiments of the present application, the adapter 43 is disposed on the pressure plate 40, so that the shielding gas in the gas supply tubing can smoothly enter the gas guide channel 42 through the adapter 43, thereby guiding the shielding gas into the gas guide channel 42. Because the gas guide channel 42 communicates with the clearance through hole 41, the shielding gas flows along the gas guide channel 42 into the clearance through hole 41. During welding of the to-be-welded region between the tab 23a and the terminal post 21a, welding slag is formed in the to-be-welded region between the terminal post 21a and the tab 23a. The shielding gas may control spatter of welding slag, and remove welding slag on the tab 23a and the terminal post 21a to reduce welding slag attached to the tab 23a and the terminal post 21a, thereby reducing the possibility that welding slag enters the interior of the battery cell 20 and improving the quality of welding.

Continue to refer to FIG. 3. Further, FIG. 4 is a schematic diagram of a structure of a pressure plate 40 according to some embodiments of the present application. The clearance through hole 41 is configured for plug-in fit with a welding tip nozzle 63 of the welding device 3000. The clearance through hole 41 forms an elongated hole corresponding to a shape of the welding tip nozzle 63.

The shape of the clearance through hole 41 may be an oblong hole, a rectangular hole, or the like, which is not excessively limited herein.

In the technical solution in the embodiments of the present application, the shape of the clearance through hole 41 matches the shape of the welding tip nozzle 63, to conveniently implement the plug-in fit between the welding tip nozzle 63 and the clearance through hole 41. In this way, a gap between a side wall of the clearance through hole 41 and the welding tip nozzle 63 is conveniently reduced. On one hand, a possibility that shielding gas leaks at the gap between the side wall of the clearance through hole 41 and the welding tip nozzle 63 can be reduced. On the other hand, a probability that welding slag is stuck between the clearance through hole 41 and the welding tip nozzle 63 can be reduced, so that welding slag can be smoothly removed, to reduce welding slag remaining on the tab 23a and the terminal post 21a, thereby further reducing the possibility that welding slag enters the interior of the battery cell 20.

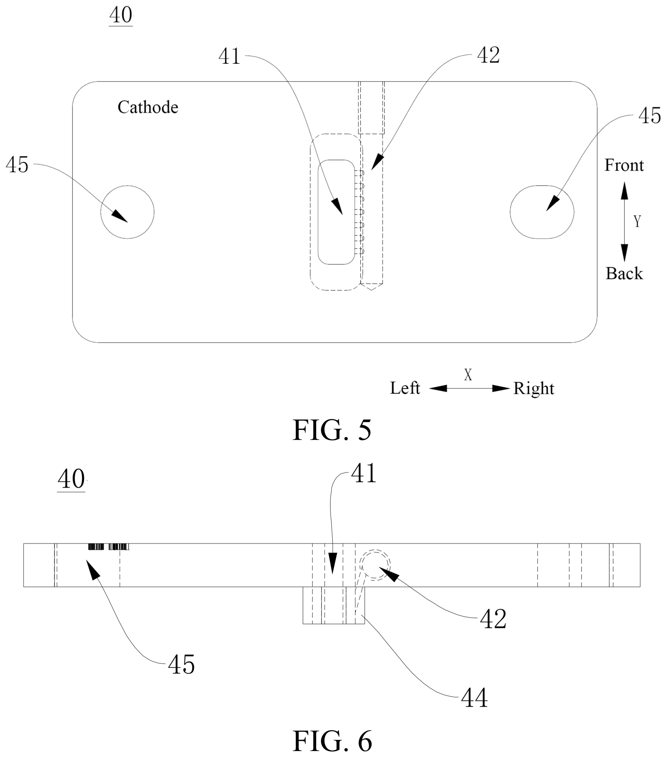

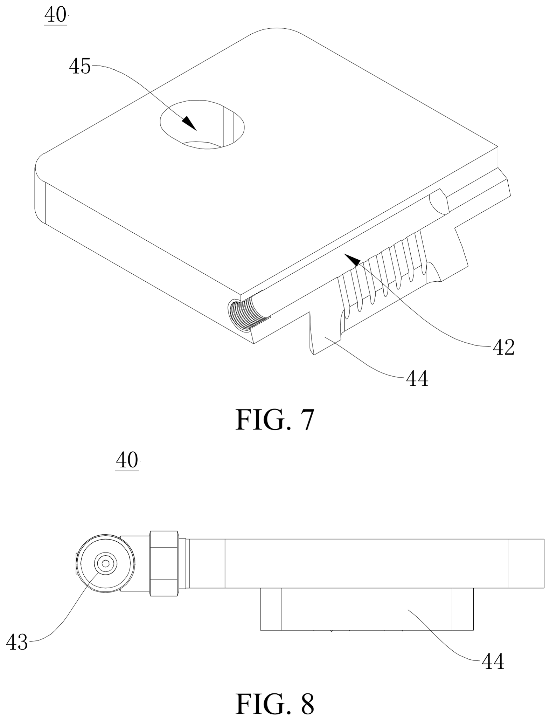

Continue to refer to FIG. 4. Further, FIG. 5 is a top view of a pressure plate 40 according to some embodiments of the present application, FIG. 6 is a side view of a pressure plate 40 according to some embodiments of the present application, and FIG. 7 is a partial schematic diagram of a structure of a pressure plate 40 according to some embodiments of the present application. The gas guide channel 42 is located on a side of the clearance through hole 41 in a length direction, and an outlet of the gas guide channel 42 is located in a middle of the clearance through hole 41 in the length direction.

The length direction of the clearance through hole 41 extends along a Y direction, and the gas guide channel 42 is located on a side of the clearance through hole 41 in the length direction.

In the technical solution in the embodiments of the present application, the clearance through hole 41 extends along the Y direction, the clearance through hole 41 occupies more space in the Y direction on the pressure plate 40, and the gas guide channel 42 is disposed on one side of the Y direction, so that the clearance through hole 41 and the gas guide channel 42 can be disposed at suitable positions on the pressure plate 40.

In addition, the outlet of the gas guide channel 42 is located in the middle of the clearance through hole 41 in the length direction, so that during the delivery of the shielding gas, the shielding gas can enter the clearance through hole 41 from the middle of the clearance through hole 41 in the length direction, and the shielding gas can be quickly and evenly distributed in the clearance through hole 41. Because the clearance through hole 41 is disposed opposite to the to-be-welded region between the tab 23a and the terminal post 21a, it is convenient to evenly distribute the shielding gas in the to-be-welded region between the tab 23a and the terminal post 21a, so that the shielding gas can fully remove welding slag generated in the to-be-welded region between the tab 23a and the terminal post 21a, thereby reducing welding slag on the tab 23a and the terminal post 21a, and fully reducing the possibility that welding slag enters the interior of the battery cell 20.

As shown in FIG. 5, the length direction of the clearance through hole 41 extends along a front-back direction, the gas guide channel 42 is disposed on a side of the clearance through hole 41 in the length direction, the gas guide channel 42 is located on a right side of the clearance through hole 41, and the gas guide channel 42 extends along the front-back direction.

To be specific, both the clearance through hole 41 and the gas guide channel 42 extend along the front-back direction, and the clearance through hole 41 and the gas guide channel 42 are arranged along a left-right direction, so that the clearance through hole 41 and the gas guide channel 42 can be disposed at suitable positions on the pressure plate 40, to properly utilize space on the pressure plate 40. In addition, such an arrangement facilitates the compact arrangement of the clearance through hole 41 and the gas guide channel 42, and facilitates reduction of space occupied by the clearance through hole 41 and the gas guide channel 42 on the pressure plate 40.

Continue to refer to FIG. 7. Further, FIG. 8 is a side view of a pressure plate 40 according to some embodiments of the present application. The pressure plate 40 is provided with an abutting portion 44, and the abutting portion 44 is configured to abut against the tab 23a to press the tab 23a against the terminal post 21a.

In the technical solution in the embodiments of the present application, the pressure plate 40 applies pressure to the tab 23a through the abutting portion 44, to reduce the gap between the tab 23a and the terminal post 21a and enlarge a contact area between the tab 23a and the terminal post 21a, and make the tab 23a and the terminal post 21a to be joined to each other as much as possible. In this way, during welding of the to-be-welded region between the tab 23a and the terminal post 21a, it is beneficial to securely weld the tab 23a and the terminal post 21a together, so that the tab 23a and the terminal post 21a are kept from being easily disconnected.

Continue to refer to FIG. 5, FIG. 6, and FIG. 7. The abutting portion 44 is disposed around the periphery of the clearance through hole 41.

In the technical solution in the embodiments of the present application, the abutting portion 44 is disposed around the periphery of the clearance through hole 41, so that the abutting portion 44 provides clearance for the to-be-welded region between the tab 23a and the terminal post 21a, and the welding device 3000 can smoothly perform welding on the to-be-welded region between the tab 23a and the terminal post 21a through the clearance through hole 41, to smoothly weld the tab 23a and the terminal post 21a together.

The clearance through hole 41 is disposed opposite to the to-be-welded region between the tab 23a and the terminal post 21a, the abutting portion 44 is disposed around the periphery of the clearance through hole 41, so that the abutting portion 44 can be in pressing fit with an outer edge of the to-be-welded region between the tab 23a and the terminal post 21a, and can further compress the edges of the tab 23a and the terminal post 21a, so that the edges of the to-be-welded region between the tab 23a and the terminal post 21a do not easily lift. In this way, it is convenient to ensure the flatness of the to-be-welded region between the tab 23a and the terminal post 21a, to better perform welding on the to-be-welded region between the terminal post 21a and the tab 23a, thereby more securely welding the terminal post 21a and the tab 23a together.

Continue to refer to FIG. 6 and FIG. 7. The abutting portion 44 forms a convex rib protruding from an outer surface of the pressure plate 40.

In the technical solution in the embodiments of the present application, the convex rib extends toward the to-be-welded region between the tab 23a and the terminal post 21a. In this way, when the pressure plate 40 is fixed on the fixing base 30 and the convex rib is in pressing fit with the tab 23a, a specific distance exists between the outer surface of the pressure plate 40 and the tab 23a, to reduce a possibility that the tab 23a contacts the outer surface of the pressure plate 40. In this way, at a position of the moving pressure plate 40, a possibility that the pressure plate 40 drives the tab 23a to move can be reduced, to ensure that the position of the tab 23a corresponds to that of the terminal post 21a, thereby securely welding the tab 23a and the terminal post 21a together.

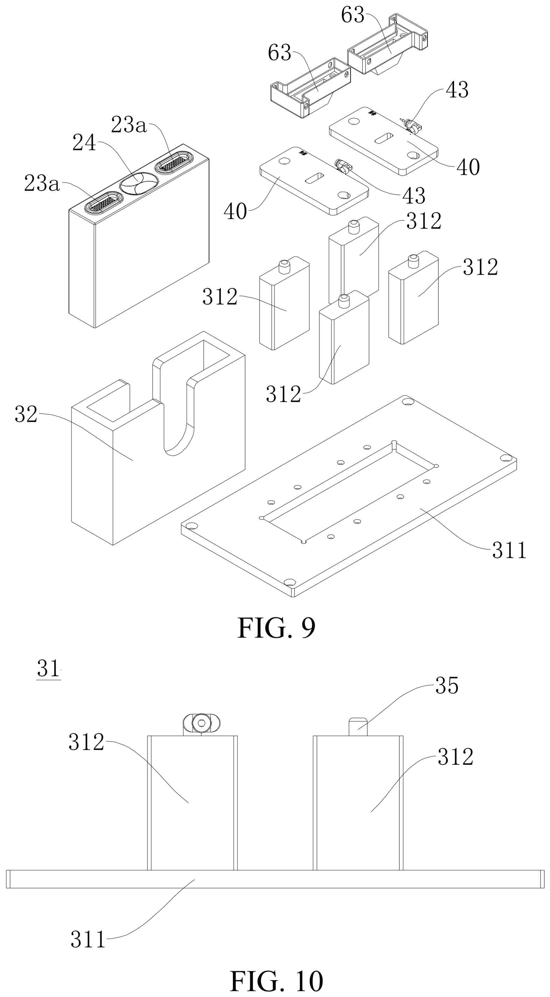

Continue to refer to FIG. 4. Further, FIG. 9 is an exploded view of a structure of a welding fixture 300 according to some embodiments of the present application, and FIG. 10 is a schematic diagram of a structure of a positioning bracket 31 according to some embodiments of the present application. A fixing portion 45 is provided on the pressure plate 40, and a fixing engagement portion 35 that engages with the fixing portion 45 is provided on the fixing base 30.

In the technical solution in the embodiments of the present application, the pressure plate 40 can be detachably fixed to the fixing base 30 through the engagement between the fixing portion 45 and the fixing engagement portion 35, to facilitate the detachment of the pressure plate 40 and facilitate the fixing of the battery cell 20 to the fixing base 30 or the removal of the battery cell 20 from the fixing base 30, thereby facilitating the processing of the battery cell 20.

Continue to refer to FIG. 4 and FIG. 10. One of the fixing portion 45 and the fixing engagement portion 35 is a fixing hole, the other of the fixing portion 45 and the fixing engagement portion 35 is a fixing post, and the fixing post is in plug-in fit with the fixing hole. The fixing hole extends through the pressure plate, and the fixing post extends along the Z direction.

In the technical solution in the embodiments of the present application, the pressure plate 40 and the fixing base 30 are in plug-in fit through the fixing post and the fixing hole, to implement quick engagement between the pressure plate 40 and the fixing base 30, to facilitate the quick fixing of the pressure plate 40 on the fixing base 30 or the quick detachment the pressure plate 40 from the fixing base 30, thereby reducing operation time and improving processing efficiency.

Continue to refer to FIG. 1, FIG. 4, and FIG. 9. At least two fixing portions 45 are provided, and the clearance through hole 41 is located between the at least two fixing portions 45.

In the technical solution in the embodiments of the present application, at least two fixing portions 45 are disposed on the pressure plate 40. In this way, when the pressure plate 40 is fixed on the fixing base 30 and the fixing portions 45 match the fixing engagement portion 35, the fixing engagement portion 35 can limit the rotation of the pressure plate 40, thereby stably fixing the pressure plate 40 on the fixing base 30.

The clearance through hole 41 is located on two sides of the fixing portions 45. In this way, after the fixing portions 45 is engaged with the fixing engagement portion 35 and the pressure plate 40 is disposed on the fixing base 30, the positions of two sides of the clearance through hole 41 are fixed. In this way, it is convenient to precisely define the position of the clearance through hole 41, so that the clearance through hole 41 can be precisely disposed opposite to the to-be-welded region between the tab 23a and the terminal post 21a. In this way, the welding device 3000 can perform precise welding on the to-be-welded region between the tab 23a and the terminal post 21a through the clearance through hole 41, thereby improving welding precision.

Continue to refer to FIG. 5. The gas guide channel 42 is located between one of the fixing portions 45 and the clearance through hole 41.

The length direction of the clearance through hole 41 extends along the Y direction, a length direction of the gas guide channel 42 extends along the Y direction, and the clearance through hole 41, the gas guide channel 42, and the fixing portion 45 are distributed along an X direction.

In the technical solution in the embodiments of the present application, the gas guide channel 42, the clearance through hole 41, and the fixing portion 45 are disposed at suitable positions on the pressure plate 40, which conveniently increases the distance between the clearance through hole 41 and the fixing portion 45, and increases the distance between the gas guide channel 42 and the fixing portion 45, to improve the structural strength of the pressure plate 40, thereby preventing the pressure plate 40 from being easily deformable.

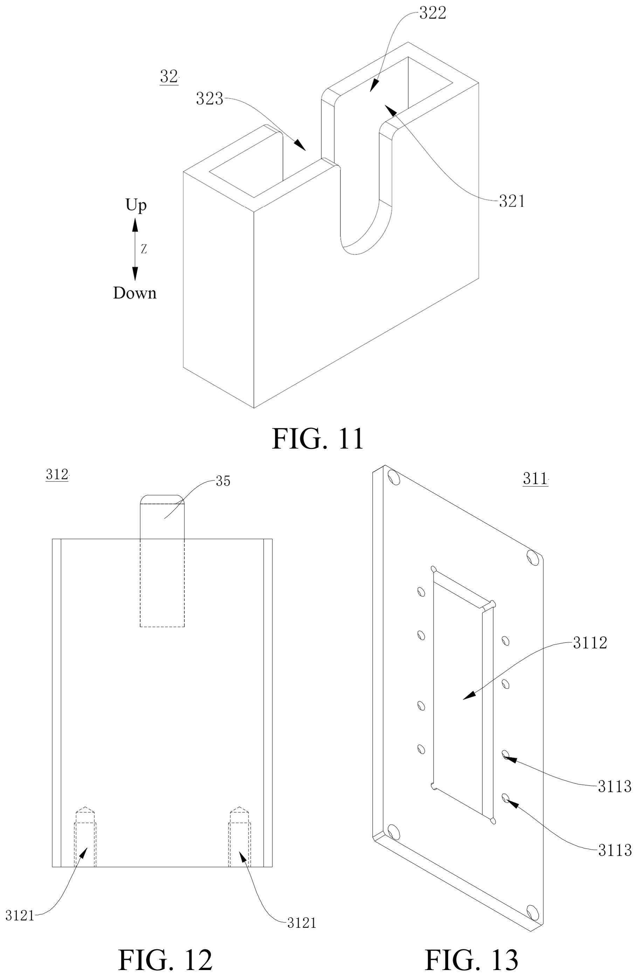

Continue to refer to FIG. 2 and FIG. 10. Further, FIG. 11 is a schematic diagram of a structure of a fixing housing 32 according to some embodiments of the present application. The fixing base 30 includes a positioning bracket 31 and a fixing housing 32. The fixing housing 32 is disposed at the positioning bracket 31, and the fixing housing 32 defines an accommodating groove 321. The accommodating groove 321 is provided with a top opening 322.

The pressure plate 40 is disposed above the accommodating groove 321, the clearance through hole 41 is disposed opposite to the top opening 322, and the pressure plate 40 is detachably connected to the positioning bracket 31 to fix the battery cell 20 in the accommodating groove 321.

The battery cell 20 may be disposed in the accommodating groove 321 from the top opening 322, and the to-be-welded region between the tab 23a and the terminal post 21a of the battery cell 20 are located at the top opening 322. When the pressure plate 40 is fixed to the positioning bracket 31, the pressure plate 40 closes the top opening 322, so that the battery cell 20 can be fixed in the accommodating groove 321, and limits the position of the battery cell 20, thereby facilitating the processing of the battery cell 20.

When the pressure plate 40 is fixed to the positioning bracket 31, the clearance through hole 41 in the pressure plate 40 is disposed opposite to the top opening 322, and the clearance through hole 41 is disposed opposite to the to-be-welded region between the tab 23a and the terminal post 21a in an up-down direction. The welding device 3000 may perform welding on the to-be-welded region between the tab 23a and the terminal post 21a through the clearance through hole 41, to perform welding on the tab 23a and the terminal post 21a.

In the technical solution in the embodiments of the present application, the accommodating groove 321 is configured to accommodate the battery cell 20. The position of the fixing housing 32 is fixed to fix the position of the battery cell 20. In this way, the battery cell 20 can be further protected while the battery cell 20 is fixed, thereby reducing a possibility that the battery cell 20 is damaged.

FIG. 11 is a schematic diagram of a structure of a fixing housing 32 according to some embodiments of the present application. At least two oppositely disposed side walls of the fixing housing 32 are provided with clearance notches 323, and the clearance notches 323 extend along a depth direction of the accommodating groove 321 and communicate with the top opening 322.

A groove depth of the accommodating groove 321 extends along the Z direction, and the clearance notches 323 extend along the Z direction.

In the technical solution in the embodiments of the present application, when the battery cell 20 is disposed in the accommodating groove 321, the clearance notches 323 are configured to provide clearance for an instrument or a hand, so that the battery cell 20 can be smoothly disposed in the accommodating groove 321, to reduce a possibility that the battery cell 20 collides with a wall body of the accommodating groove 321, thereby reducing a possibility that the battery cell 20 is damaged.

Continue to refer to FIG. 10. Further, FIG. 12 is a schematic diagram of a structure of a limiting member 312 according to some embodiments of the present application, and FIG. 13 is a schematic diagram of a structure of a positioning plate 311 according to some embodiments of the present application. The positioning bracket 31 includes a positioning plate 311 and a plurality of limiting members 312. The positioning plate 311 is provided with a mounting region. The fixing housing 32 is disposed in the mounting region. The plurality of limiting members 312 are disposed on the positioning plate 311, and the plurality of limiting members 312 are disposed at intervals around a peripheral direction of the mounting region. The pressure plate 40 is in fixed engagement with the limiting members 312.

In the technical solution in the embodiments of the present application, the fixing housing 32 is disposed in the mounting region, so that the fixing housing 32 can be fixed to the mounting plate. When the battery cell 20 is disposed in the accommodating groove 321, the plurality of limiting members 312 are disposed at intervals around the peripheral direction of the battery cell 20. When the pressure plate 40 and the limiting members 312 are in fixed engagement, relative positions of the pressure plate 40 and the battery cell 20 can be accurately determined, so that the clearance through hole 41 can be accurately disposed opposite to the to-be-welded region between the tab 23a and the terminal post 21a. When the welding device 3000 performs welding on the tab 23a and the terminal post 21a through the clearance through hole 41, the terminal post 21a and the tab 23a at the to-be-welded region between the tab 23a and the terminal post 21a can be accurately welded together.

Continue to refer to FIG. 13. A positioning hole 3112 is provided in the mounting region, and the fixing housing 32 is disposed in the positioning hole 3112. The positioning hole 3112 extends through the positioning plate 311, and the fixing housing 32 may extend into the positioning hole 3112, to fix the fixing housing 32 at a mounting region of the positioning plate 311.

In the technical solution in the embodiments of the present application, the positioning plate 311 can define the position of the fixing housing 32 in the X direction and the Y direction. After the battery cell 20 is disposed in the accommodating groove 321, the fixing housing 32 defines the position of the battery cell 20 in the X direction and the Y direction, to fix the battery cell 20 on the fixing base 30. In this way, when the pressure plate 40 is fixedly engaged with the limiting member 312, a relative position of the battery cell 20 and the pressure plate 40 can be accurately determined.

In summary, the fixing housing 32 extends into the positioning hole 3112, the position of the fixing housing 32 may be preliminarily limited by a side wall of the positioning hole 3112, and the side wall of the positioning hole 3112 has a clamping force for the fixing housing 32, to implement fixed engagement between the fixing housing 32 and the positioning plate 311. This fixing manner is simple and convenient to implement, facilitates adjustment of a length by which the fixing housing 32 extends out of the positioning hole 3112, and adjusts a distance between the top opening 322 of the accommodating groove 321 and the top of the limiting member 312. When the pressure plate 40 is fixed to the limiting member 312, it is convenient to control a distance between the pressure plate 40 and the battery cell 20, and control the magnitude of a pressing force of the pressure plate 40 on the tab 23a of the battery cell 20, to make the tab 23a fully in pressing fit with the terminal post 21a, so that the welding device 3000 can securely weld the tab 23a and the terminal post 21a together.

In this embodiment, when the fixing housing 32 is disposed in the positioning hole 3112, a side wall of the limiting member 312 is in pressing fit with a side wall of the fixing housing 32, to further limit the position of the fixing housing 32, thereby reducing a possibility that the fixing housing 32 shakes. In this way, the clearance through hole 41 can be accurately disposed opposite to the to-be-welded region between the tab 23a and the terminal post 21a, and the welding device 3000 can perform precise welding on the to-be-welded region between the tab 23a and the terminal post 21a through the clearance through hole 41.

Continue to refer to FIG. 12 and FIG. 13. The positioning plate 311 is connected to the limiting member 312 by a fastening member 51.

In the technical solution in the embodiments of the present application, the fixed engagement between the positioning plate 311 and the limiting member 312 is implemented using a simple method, thereby reducing mounting difficulty and reducing costs.

Specifically, as shown in FIG. 12 and FIG. 13, the positioning bracket 31 includes a positioning plate 311 and a plurality of limiting members 312. The positioning plate 311 includes a plurality of first connecting holes 3113. A second connecting hole 3121 is provided at the bottom of the limiting member 312. The fastening member 51 passes through the first connecting hole 3113 and the second connecting hole 3121, to fix the positioning plate 311 and the fastening member 51 together. Further, the fixing housing 32 is fixed by the positioning plate 311 and the limiting member 312. The battery cell 20 is disposed in the fixing housing 32. The limiting member 312 is fixed to the pressure plate 40, and the pressure plate 40 abuts against the tab 23a of the battery cell 20 to make the tab 23a in pressing fit with the terminal post 21a, so that the welding device 3000 conveniently welds the tab 23a and the terminal post 21a together.

The fastening member 51 may be a screw. The second connecting hole 3121 is provided with internal threads. The fastening member 51 passes through the first connecting hole 3113 to be threadedly engaged with the second connecting hole 3121, to fix the positioning plate 311 and the limiting member 312 together. The fastening member 51 may alternatively be an expansion screw, a pin, or the like, which is not excessively limited herein.

Continue to refer to FIG. 1. Two pressure plates 40 are provided, four limiting members 312 are provided and are grouped in pairs, and the two limiting members 312 in each group are located on two opposite sides of the fixing housing 32 and are in fixed engagement with the corresponding pressure plate 40.

In the technical solution in the embodiments of the present application, each pressure plate 40 is in fixed engagement with a group of limiting members 312, and four limiting members 312 are provided, so that the two pressure plates 40 are disposed on the fixing base 30. The two pressure plates 40 abut against two tabs 23a of the battery cell 20. The two pressure plates 40 may separately apply pressure to the two tabs 23a, so that the two tabs 23a can be in pressing fit with corresponding terminal post 21a. The welding device 3000 may separately perform welding on the two tabs 23a within a short time, thereby improving the welding efficiency of the welding device 3000.

As shown in FIG. 1 and FIG. 12, four limiting members 312 are arranged at intervals along the front-back direction and the left-right direction around the peripheral direction of the mounting region. One group of limiting members 312 are disposed close to a front side of the positioning plate 311, and the other group of limiting members 312 are disposed close to a rear side of the positioning plate 311. The two limiting members 312 in each group are disposed right opposite to each other in the left-right direction. A fixing post is disposed at the top of each limiting member 312. A length direction of the pressure plate 40 extends along the left-right direction, the two positioning holes 3112 are provided on the pressure plate 40, and the two positioning holes 3112 are disposed at intervals in the left-right direction. Each pressure plate 40 is in fixed engagement with the two limiting members 312.

In this embodiment, the battery cell 20 includes a positive tab and a negative tab. One group of limiting members 312 are located on left and right sides of the positive tab of the battery cell 20, and the other group of limiting members 312 are located on left and right sides of the negative tab of the battery cell 20. When the pressure plates 40 are fixed to the limiting members 312, the two pressure plates 40 are respectively disposed opposite the positive tab and the negative tab. The two pressure plates 40 respectively abut against the positive tab and the negative tab. The positive tab is in pressing fit with a positive terminal post, and the negative tab is in pressing fit with a negative terminal post. In this way, when the welding device 3000 welds the to-be-welded region between the tab 23a and the terminal post 21a, the positive tab and the positive terminal post can be welded together, and the negative tab and the negative terminal post can be welded together, thereby improving welding efficiency.

According to some embodiments of the present application, a welding fixture 300 is provided. The welding fixture 300 includes a fixing base 30 and two pressure plates 40. The fixing base 30 includes a positioning bracket 31 and a fixing housing 32. The fixing housing 32 defines an accommodating groove 321 provided with a top opening 322. The battery cell 20 is placed in the accommodating groove 321. The fixing housing 32 is fixed to the positioning bracket 31. The pressure plate 40 is fixed to the positioning bracket 31. The pressure plate 40 is provided with a clearance through hole 41. The battery cell 20 includes two tabs 23a. The clearance through holes 41 in the two pressure plates 40 are disposed opposite to the two tabs 23a one by one in the up-down direction.

An abutting portion 44 is provided on a lower surface of the pressure plate 40. The abutting portion 44 extends downward protruding from the outer surface of the pressure plate 40. The abutting portion 44 extends around a peripheral direction of the clearance through hole 41. When the pressure plate 40 is fixed to the positioning bracket 31, the abutting portion 44 is in a pressing fit with the tab 23a opposite to the abutting portion 44, to apply a force to the tab 23a, so that the tab 23a is in pressing fit with the terminal post 21a, thereby facilitating the welding of the tab 23a and the terminal post 21a together.

The pressure plate 40 is provided with a gas guide channel 42. The gas guide channel 42 communicates with the clearance through hole 41 to guide shielding gas into the clearance through hole 41. When the tab 23a and the terminal post 21a are welded together, welding slag is generated, and the shielding gas may control spatter of welding slag and remove welding slag on the tab 23a and the terminal post 21a, to reduce welding slag attached to the surfaces of the tab 23a and the terminal post 21a, thereby reducing a possibility that welding slag enters the interior of the battery cell 20 and improving the quality of welding.

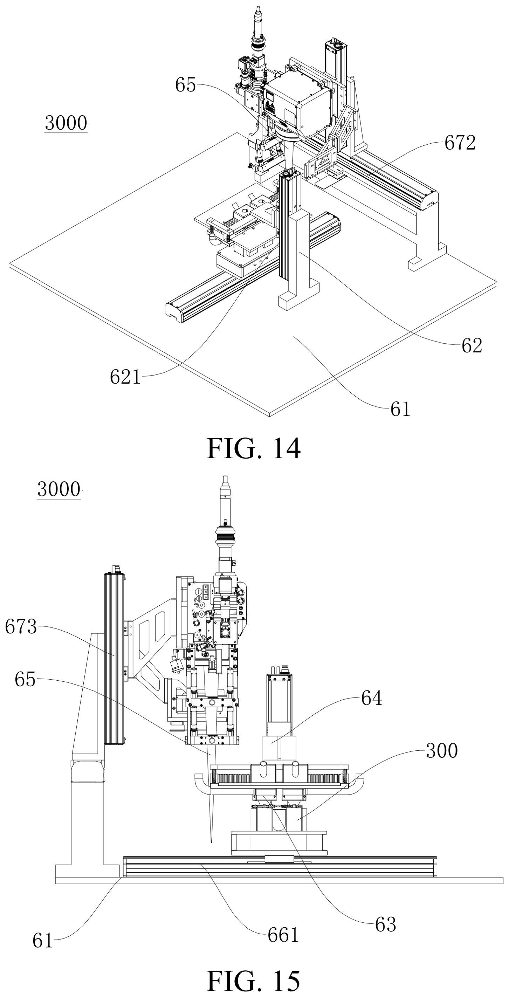

According to some embodiments of the present application, the present application further provides a welding device 3000. FIG. 14 is a schematic diagram of a structure of a welding device 3000 according to some embodiments of the present application. The welding device 3000 includes a device body 600 and the welding fixture 300 in any foregoing solution.

The device body 600 is provided with a worktable surface 61, and the welding fixture 300 is disposed on the worktable surface 61. The worktable surface 61 may be a flat table surface, and the position of the welding fixture 300 on the worktable surface 61 may be fixed or may be movable.

In the technical solution in the embodiments of the present application, the shielding gas is delivered into the gas guide channel 42 during a welding process, and the shielding gas enters the clearance through hole 41 along the gas guide channel 42, so that spatter of welding slag at the to-be-welded region between the tab 23a and the terminal post 21a can be controlled, and welding slag on the tab 23a and the terminal post 21a can be removed, to reduce welding slag remaining in the to-be-welded region between the tab 23a and the terminal post 21a, thereby improving the quantity of welding of the welding device 3000.

Continue to refer to FIG. 14. Further, FIG. 15 is a side view of a welding device 3000 according to some embodiments of the present application. In some embodiments of the present application, the device body 600 includes a mounting bracket 62 and a welding tip nozzle 63. The mounting bracket 62 is disposed on the worktable surface 61. The welding tip nozzle 63 is disposed on the mounting bracket 62. The welding tip nozzle 63 is configured to interface with the clearance through hole 41.

The device body 600 includes a dust removal assembly 64. The dust removal assembly 64 is configured to deliver shielding gas to the gas guide channel 42.

Because the gas guide channel 42 communicates with the clearance through hole 41, the shielding gas delivered by the dust removal assembly 64 enters the clearance through hole 41 along the gas guide channel 42, so that the shielding gas can control the spatter of welding slag at the to-be-welded region between the tab 23a and the terminal post 21a, and remove welding slag on the tab 23a and the terminal post 21a, to reduce welding slag remaining on the tab 23a and the terminal post 21a, thereby reducing a possibility that welding slag enters the interior of the battery cell 20 and improving the quality of welding. In addition, the shielding gas is guided into the clearance through hole 41, so that the quality of weld seams can be further improved, and the oxide rates of the tab 23a and the terminal post 21a can be reduced.

Continue to refer to FIG. 15. A lifting assembly 621 is disposed on the mounting bracket 62, and the lifting assembly 621 is connected to the welding tip nozzle 63 to drive the welding tip nozzle 63 to move up and down.

In the foregoing technical solution, the welding tip nozzle 63 is driven to move up and down to adjust a position of the welding tip nozzle 63 in an up-down direction, to adapt to situations in which the pressure plate 40 is at different heights, so that the welding tip nozzle 63 can smoothly interface with the clearance through hole 41.

In addition, a downward force is applied to the welding tip nozzle 63, and the welding tip nozzle 63 can apply a downward force to the pressure plate 40, to increase a pressing force between the pressure plate 40 and the tab 23a, so that the tab 23a is fully in pressing fit with the terminal post 21a, thereby making the tab 23a and the terminal post 21a more securely welded together when the tab 23a and the terminal post 21a are welded.

As shown in FIG. 14, in this embodiment, a first movement assembly is disposed on the worktable surface 61, the welding fixture 300 is disposed on the first movement assembly, the first movement assembly includes a first track 661 extending along the Y direction, and the welding fixture 300 is movably disposed on the first track 661, to adjust a position of the welding fixture 300 in the Y direction, to facilitate adjustment of a position between the welding fixture 300 and the welding tip nozzle 63, thereby facilitating the arrangement of the battery cell 20 in the welding fixture 300 or the removal of the battery cell 20 from the welding fixture 300.

As shown in FIG. 14, in this embodiment, the welding device 3000 further includes a laser welding portion 65 and a second movement assembly. The second movement assembly is disposed on the worktable surface 61. The second movement assembly includes a second track 672 extending along the X direction and a third track 673 extending along the Z direction. The laser welding portion 65 is disposed on the third track 673, and the third track 673 is disposed on the second track 672, so that positions of the laser welding portion 65 in the Z direction and the X direction can be adjusted, and the laser welding portion 65 can sufficiently weld the to-be-welded region between the tab 23a and the terminal post 21a.

Finally, it should be noted that the foregoing embodiments are merely intended for describing the technical solutions of this application other than limiting this application. Although this application is described in detail with reference to the foregoing embodiments, persons of ordinary skill in the art should understand that modifications may still be made to the technical solutions described in the foregoing embodiments or equivalent replacements may be made to some or all technical features thereof, without departing from the scope of the technical solutions of embodiments of this application. All such modifications and equivalent replacements shall fall within the scope of claims and specification of this application. Especially, as long as there is no structural conflict, the various technical features mentioned in each embodiment can be combined in any way. The present application is not limited to the particular embodiments disclosed herein, but includes all technical solutions that fall within the scope of the claims.

## Claims

1. A welding fixture, comprising:
a fixing base, the fixing base being configured to fix a battery cell; and
at least one pressure plate, the pressure plate being detachably fixed to the fixing base, and being configured to press a tab of the battery cell against a terminal post, wherein
the pressure plate is provided with a clearance through hole and a gas guide channel, the clearance through hole is disposed opposite to a to-be-welded region between the tab and the terminal post, and the gas guide channel communicates with the clearance through hole to guide shielding gas into the clearance through hole.

2. The welding fixture according to claim 1, wherein an adapter configured to connect to gas supply tubing is disposed on the pressure plate, and the adapter communicates with the gas guide channel.

3. The welding fixture according to claim 1 or 2, wherein the clearance through hole is configured for plug-in fit with a welding tip nozzle of a welding device, and the clearance through hole forms an elongated hole corresponding to a shape of the welding tip nozzle.

4. The welding fixture according to claim 3, wherein the gas guide channel is located on a side of the clearance through hole in a length direction, and an outlet of the gas guide channel is located in a middle of the clearance through hole in the length direction.

5. The welding fixture according to any one of claims 1 to 4, wherein the pressure plate is provided with an abutting portion, and the abutting portion is configured to abut against the tab to press the tab against the terminal post.

6. The welding fixture according to claim 5, wherein the abutting portion is disposed around a periphery of the clearance through hole.

7. The welding fixture according to claim 5 or 6, wherein the abutting portion forms a convex rib protruding from an outer surface of the pressure plate.

8. The welding fixture according to any one of claims 1 to 7, wherein a fixing portion is provided on the pressure plate, and a fixing engagement portion that engages with the fixing portion is provided on the fixing base.

9. The welding fixture according to claim 8, wherein one of the fixing portion and the fixing engagement portion is a fixing hole, and the other of the fixing portion and the fixing engagement portion is a fixing post in plug-in fit with the fixing hole.

10. The welding fixture according to claim 8 or 9, wherein at least two fixing portions are provided, and the clearance through hole is located between the at least two fixing portions.

11. The welding fixture according to claim 10, wherein the gas guide channel is located between one of the fixing portions and the clearance through hole.

12. The welding fixture according to any one of claims 1 to 11, wherein the fixing base comprises:
a positioning bracket; and
a fixing housing, the fixing housing being disposed at the positioning bracket and defining an accommodating groove provided with a top opening, and the accommodating groove being configured to accommodate the battery cell, wherein
the pressure plate is disposed above the accommodating groove, the clearance through hole is disposed opposite to the top opening, and the pressure plate is detachably connected to the positioning bracket to fix the battery cell in the accommodating groove.

13. The welding fixture according to claim 12, wherein at least two oppositely disposed side walls of the fixing housing are provided with clearance notches, and the clearance notches extend along a depth direction of the accommodating groove and communicate with the top opening.

14. The welding fixture according to claim 12 or 13, wherein the positioning bracket comprises:
a positioning plate, the positioning plate being provided with a mounting region, and the fixing housing being disposed in the mounting region; and
a plurality of limiting members, the plurality of limiting members being disposed on the positioning plate and being disposed at intervals around a peripheral direction of the mounting region, and the pressure plate being in fixed engagement with the limiting members.

15. The welding fixture according to claim 14, wherein a positioning hole is provided in the mounting region, and the fixing housing is disposed in the positioning hole.

16. The welding fixture according to claim 14 or 15, wherein the positioning plate is connected to the limiting members by fastening members.

17. The welding fixture according to any one of claims 14 to 16, wherein two pressure plates are provided, four limiting members are provided and are grouped in pairs, and the two limiting members in each group are located on two opposite sides of the fixing housing and are in fixed engagement with the corresponding pressure plate.

18. A welding device, comprising:
a device body, the device body being provided with a worktable surface; and
a welding fixture, the welding fixture being disposed on the worktable surface, and the welding fixture being the welding fixture according to any one of claims 1 to 17.

19. The welding device according to claim 18, wherein the device body comprises:
a mounting bracket, the mounting bracket being disposed on the worktable surface;
a welding tip nozzle, the welding tip nozzle being disposed in the mounting bracket, and being configured to interface with the clearance through hole; and
a dust removal assembly, the dust removal assembly being configured to deliver the shielding gas to the gas guide channel.

20. The welding device according to claim 19, wherein a lifting assembly is disposed on the mounting bracket, and the lifting assembly is connected to the welding tip nozzle to drive the welding tip nozzle to move up and down.
